**Europäisches Patentamt**

**European Patent Office**

**Office européen des brevets**

(11) Publication number: **0 235 094**

**A1**

(12) **EUROPEAN PATENT APPLICATION**

(21) Application number: **87830028.4**

(22) Date of filing: **23.01.87**

(51) Int. Cl.³: **B 60 D 1/10**
**B 60 B 33/02**

(30) Priority: **25.02.86 IT 6714586**

(43) Date of publication of application:
**02.09.87 Bulletin 87/36**

(84) Designated Contracting States:
**BE CH DE ES FR GB GR LI SE**

(71) Applicant: **PIANELLI & TRAVERSA S.a.s.**
**Corso IV Novembre 53**
**I-10090 Cascine Vica Torino(IT)**

(72) Inventor: **Grande, Dario**
**Corso Trapani 183**
**I-10141 Torino(IT)**

(74) Representative: **Bosotti, Luciano et al,**
**c/o Jacobacci-Casetta & Perani S.p.A. Via Alfieri, 17**
**I-10121 Torino(IT)**

(54) Coupling device for carriages, particularly carriages for transport systems for industrial plants.

(57) The device enables the coupling together of two carriages such as, for example, the so-called AGV or wire-guided vehicles used in transport systems in industrial plants. One of the carriages, serving as a trailer, has a draw-bar (1) with a free end (6) for insertion, during the coupling operation, in a guide body (11) mounted on the carriage which serves as the tractor. The guide body (11) has a generally flared configuration with a wider mouth part (12) and a narrower bottom part (13) in which a bolt (14) acts to lock the free end (6) of the draw-bar (1) to effect the coupling together of the two carriages. The movement of the bolt (14) is controlled by a sensor member (17) which detects when the free end (6) of the draw-bar (1) has been fully inserted into the guide body (11). The bolt may be disengaged selectively from the free end of the draw-bar (1) to allow the carriages to be uncoupled.

FIG 2

EP 0 235 094 A1

<u>Coupling device for carriages, particularly carriages</u>

<u>for transport systems for industrial plants.</u>

The present invention relates to a device which enables the coupling together of two carriages intended to act as a tractor and trailer respectively.

The invention has been developed for possible use in the field of transport systems for industrial plants, including carriages constituted by inductive-guide vehicles generally termed AGV (automated guided vehicles). Such vehicles are also known as wire-guided vehicles since their prescribed path of movement is defined by wire conductors embedded in the floor on which the vehicles move. The wires in question can generate a magnetic field constituting a track which is followed automatically by the vehicles.

In plants of the aforesaid type, intended for use in the field of highly-automated production lines, it is considered essential to be able to couple and uncouple the carriages without the need for manual intervention.

In general, the automatic uncoupling may be carried out relatively easily. On the other hand, the coupling, which is achieved by a relative approach movement of the two carriages, may give rise to considerable operational difficulties. In fact, it differs from the case of carriages movable on rails in that the approach movement or bringing together of two carriages cannot generally be carried out with sufficient precision as to ensure that the coupling members provided on the two carriages are coupled together in every case. This makes it necessary for the coupling to be carried out manually, with the introduction of down-times which reduce the efficiency of the plant in which the transport system is installed.

- 2 -

The present invention has the object of providing a device which enables two carriages to be coupled together automatically without the disadvantages indicated above, one carriage being provided with a draw-bar with a free end which, during the coupling operation, is intended to approach a predetermined region of the other carriage.

According to the present invention, this object is achieved by virtue of a device of the type specified above, characterised in that it comprises:

- a guide body having a generally flared configuration with a wider mouth part and a narrower bottom part, intended for mounting on the other carriage with the mouth part located in the said predetermined region and facing outwardly of the said other carriage, so that the free end of the draw-bar can be guided towards the bottom part of the guide body as a result of the relative approach movement,

- coupling means movable between a rest position and an active position in which the coupling means themselves can retain the free end of the draw-bar in the bottom part of the guide body in order to effect the coupling together of the two carriages,

- at least one sensor element which can detect the arrival of the free end of the draw-bar in the bottom part of the guide body as a result of the relative approach movement, in order to command the movement of the coupling means to the active position, and

- disengagement means which can be activated selectively to return the coupling means to the rest position.

The invention will now be described, purely by way of non-limiting example, with reference to the appended drawings, in which:

Figure 1 is a illustrates schematically two carriages which can be connected together by a coupling device of the invention, and

Figures 2 and 3 illustrate the structure of the coupling device of the invention in two different operating conditions.

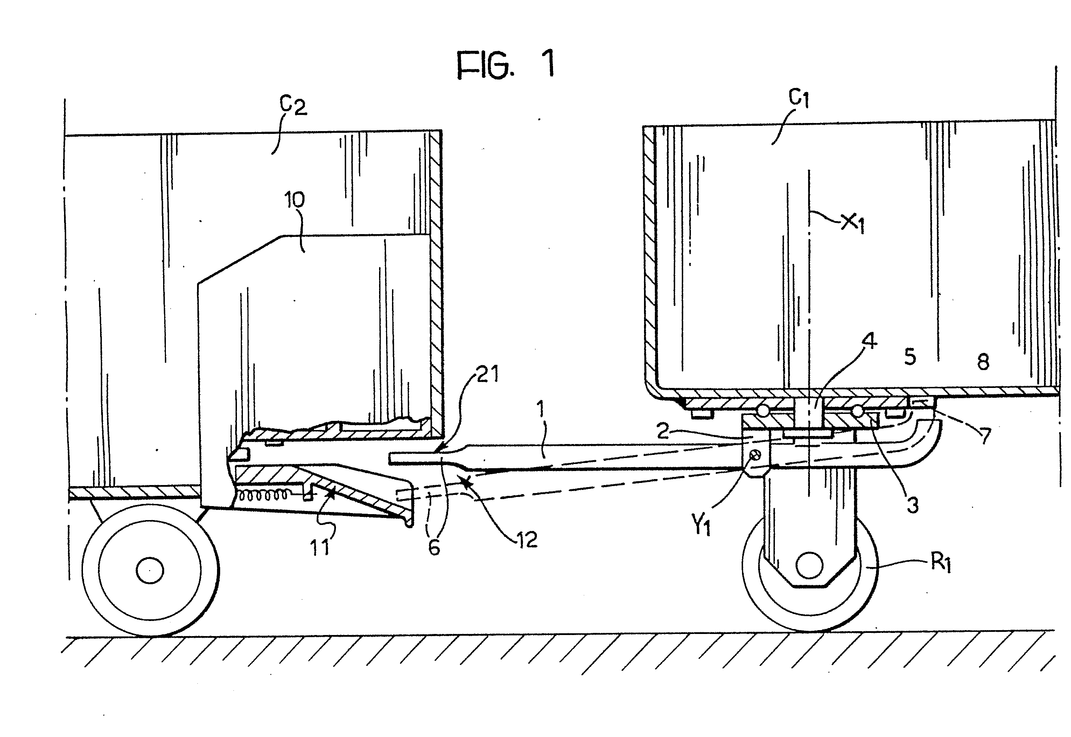

In Figure 1, two carriages (not illustrated in their entirety) of a transport system of an industrial plant are indicated $C_1$ and $C_2$.

In the following description, it will be supposed that the carriage $C_1$ is a "trailer", that is, a carriage without independent drive means, which can move only when it is coupled to another carriage (in the case illustrated here, the carriage $C_2$) which is motorised and which can act as the "tractor". The carriage $C_2$ may be constituted, to advantage, by an inductive or wire-guided vehicle of the type generally known as an AGV.

The trailer carriage $C_1$ has a guide-bar or draw-bar 1 which can be oriented about a vertical axis $X_1$ and can cause a similar orientation of the front wheels $R_1$ of the carriage $C_1$.

More precisely, the draw-bar 1 is mounted with a general rocker-arm configuration on a bracket 2 which allows it a limited pivoting movement about a horizontal axis $Y_1$. The bracket 2 projects downwardly

- 4 -

from a plate 3 which is itself free to rotate about a shaft or pin 4 whose axis coincides with the axis $X_1$.

The shaft 4 is fixed to a plate 5 which is mounted on the carriage $C_1$ beneath the loading plane of the carriage itself.

The draw-bar 1 is thus able to effect two distinct movements, that is to say, an angular traversing movement (in a substantially horizontal direction) about the axis $X_1$, and a pivoting movement in vertical planes (that is, substantially perpendicular to the traversing plane) about the horizontal axis $Y_1$ of hinging to the bracket 2.


As a result of this second pivoting movement, the free end 6 of the draw-bar 1 can be raised and lowered relative to the ground, as shown schematically in full outline (raised position) and broken outline (lowered position) in Figure 1.

Thus, the opposite end 7 of the draw-bar 1 can thus also pivot with a movement corresponding to but opposite the pivoting movement of the free end 6.

The plate 5 has apertures 8, normally in the form of notches, which can be engaged by the end 7 of the draw-bar 1 when it is in its raised position as a result of the lowering of the free end 6.

More precisely, when the free end is coupled to the drive carriage $C_2$ (according to criteria which will be explained more fully below) the opposite or rear end 7 is in a generally lowered position so as to be safely disengaged from the notches 8. In these conditions, therefore, the draw-bar 1 is free to traverse about the axis $X_1$, orienting the wheels $R_1$ of the carriage $C_1$ correspondingly.

When the free end 6 of the draw-bar 1 is left free, however, it tends to drop under gravity, causing a corresponding raising of the rear end 7. The latter may thus engage a corresponding notch 8 in the periphery of the plate 5: since, as seen, the plate 5 is fixed to the structure of the carriage $C_1$, the angular traversing movement of the draw-bar 1 (and of the wheels $R_1$) is prevented under these conditions.

For example, the plate 5 may have a single notch 8 aligned with the central axis of the carriage $C_1$. In this case, the draw-bar 1 may be locked in a position of alignment with the longitudinal axis, avoiding accidental displacement as a result of a bump. Alternatively, the plate 5 may have several notches 8 located in predetermined angular positions to enable the draw-bar 1 to be retained in corresponding angular positions, preventing it from being displaced as a result of a bump. The plate 5 may then be selectively orientable relative to the structure of the carriage $C_1$ so as to widen even further the range of choice of angular positions in which the draw-bar 1 is locked.

In each case, it is possible to lock the draw-bar 1 in a predetermined angular position when it is not being used to draw the carriage $C_1$. The free end 6 may thus be held in a precisely determined position to enable its precise insertion in the coupling unit 10 mounted on the carriage $C_2$ during the coupling together of two carriages.

- 6 -

This operation is achieved by a relative approach movement of the free end 6 of the draw-bar 1 to the region of the carriage $C_2$ in which the coupling unit 10 is mounted. Normally, this relative approach movement is caused by the movement of the tractor carriage $C_2$ towards the carriage $C_1$ acting as the trailer.

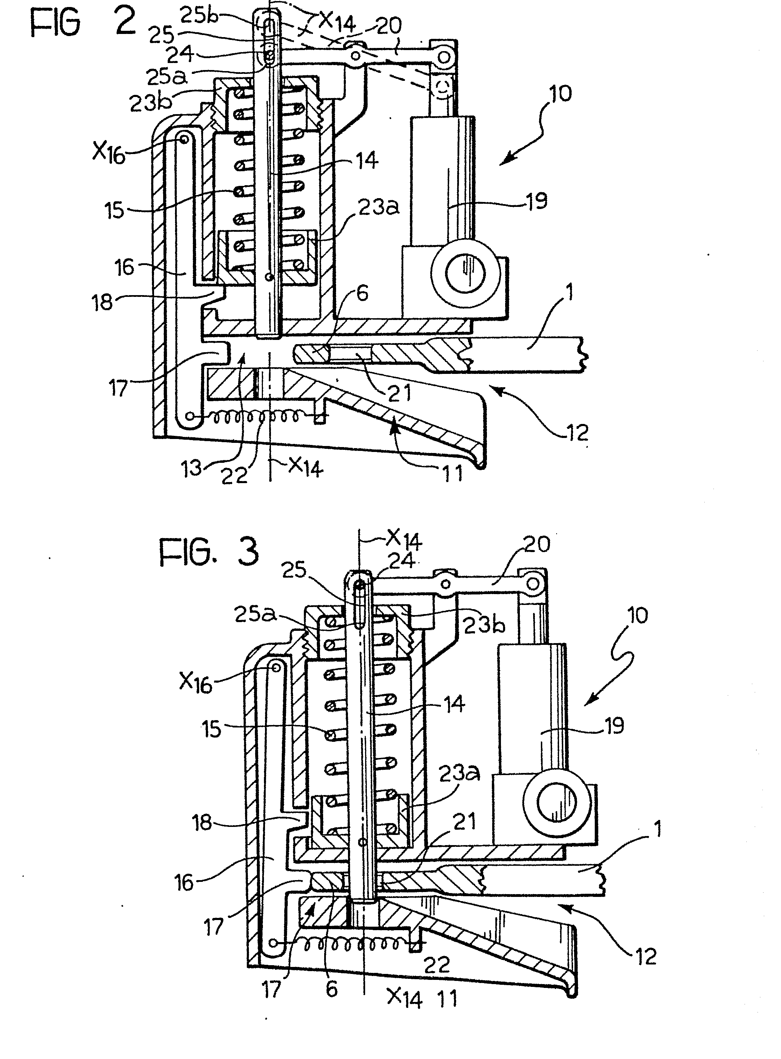

Thus, as best seen in Figures 2 and 3, the coupling unit 10 comprises:

- a casing the lower part of which defines a guide body 11 having a generally flared or funnel-shaped configuration with a wider mouth part 12 and a narrower bottom part 13,
- a coupling member constituted essentially by a bolt or obturator 14 slidable vertically along a respective longitudinal axis $X_{14}$ and on which is fitted a helical spring 15 serving as a resilient biassing member,
- a pivoted arm 16 having a first appendage 17 which extends within the bottom part 13 of the guide body 11 and a second appendage 18 which constitutes a sort of tooth or trigger intended to cooperate with the bolt 14, and
- an electromagnetic linear actuator 19 which acts on the bolt 14 through a rocker mechanism 20.

The unit 10 is mounted on the carriage $C_2$ so that the wider mouth part 12 of the guide body 11 faces outwardly of the carriage $C_2$ at a height substantially corresponding to the height at which the free end 6 of the draw-bar 1 is located (in both the raised position and the lowered position).

This free end has a hole 21 with a vertical axis, through which the bolt 14 can pass when it moves downwardly along the axis $X_{14}$.

As may be seen from a comparison of Figures 2 and 3, the arm 16 provided with the appendages 17 and 18 can pivot about a generally horizontal axis $X_{16}$ between a first operating position, illustrated in Figure 2, and a second operating position, illustrated in Figure 3.

A further helical spring 22 acts between the free end of the arm 16 and the casing of the unit 10, biassing the arm 16 itself into the first operating position.

In this operating position, the appendage 17 extends within the bottom part 13 of the guide body 10 and the appendage 18 retains the bolt 14 in the raised position (longitudinal rest position). In these conditions, the spring 15 is compressed resiliently between two cup-shaped bodies (caps) 23a and 23b fixed to the bolt 14 and to the housing of the coupling unit 10 respectively.

Preferably, the cup-shaped element 23b has external threading which cooperates with corresponding threading on the casing of the coupling unit 10. The cup-shaped body 23b can therefore be rotated to adjust selectively the load conditions of the spring 15, thus varying the resilient biassing force produced by it.

In the second operating position of Figure 3, the appendage 17 is at least partially withdrawn from the bottom part 13 of the guide body 10. The appendage 18 disengages the cup-shaped body 23a, enabling the spring 15 to extend and consequently the bolt 14 to advance towards a second longitudinal operating position in which the bolt itself extends into the bottom part 13 of the guide body 10.

The bolt 14 may be returned to its first longitudinal operating position (Figure 2) by activation of the actuator 19, which causes pivoting of the rocker arm 20 towards the position illustrated in broken outline in Figure 2. In this angular position, the end of the rocker arm 20 connected to the actuator 19 is lowered, or at least displaced towards the guide body 10, while the opposite end is raised and moves away from the guide body 10 to draw the bolt 14 with it towards its longitudinal rest position (Figure 2) against the biasing force exerted by the spring 15.

The end of the rocker arm 20 opposite the actuator 19 has a pin 24 which can slide within a longitudinal slot 25 provided in the end of the bolt 14 opposite the guide body 10.

The slot 25 has two ends 25a and 25b aligned with the axis $X_{14}$ of the bolt 14 and separated by a distance substantially equal to the distance travelled by the bolt 14 in its movement between the longitudinal rest position of Figure 2 and the longitudinal active position of Figure 3.

Thus, after the actuator 19 has been activated and made to move from the rest position illustrated in full outline in Figures 2 and 3 towards its active position, to cause the pivoting of the rocker arm 20 towards the position illustrated in broken outline in Figure 2 and the consequent resetting of the bolt 14, the actuator 19 may be returned again to the rest position by the cutting off of its supply.

In fact, during the resetting movement of the bolt 14, the pin 24 mounted on the rocker arm 20 cooperates with the end 25b of the slot 25 to exert axial traction thereon. After the bolt 14 has reached the rest or reset position, the return movement towards the active position of Figure 2, induced by the spring 15, is prevented by the appendage 18 which bears against the cup-shaped body 23a. The actuator 19 may then be returned to its rest position by pivoting of the rocker arm 20 towards the position illustrated in full outline. This pivoting movement is not prevented by the pin 24 which is free to slide within the slot 25.

In the rest condition (the carriages $C_1$, $C_2$ uncoupled), the coupling unit 10 is in the operating condition illustrated in Figure 2, with the bolt 14 in the reset position and the spring 15 axially compressed.

In order to achieve coupling, the tractor carriage $C_2$ advances or, more precisely, moves backwards towards the trailer carriage $C_1$ to cause, as a result of the relative approach thus induced, the free end 6 of the draw-bar 1 to penetrate the guide body 11.

As a result of the general flared or funnel-shaped configuration of the guide body, the end 6 is safely guided towards the bottom part 13 of the guide body 11 itself, even when a condition of precise relative alignment did not exist originally.

Usually, however, as seen from the above, the free end 6 is in the lowered position illustrated in broken outline in Figure 1, in order to lock the draw-bar 1 and prevent angular movement as a result of a bump.

During the approach of the tractor carriage $C_2$, the free end 6 of the draw-bar 1 slides on the lower part of the guide body 11 and is thus raised until it penetrates the bottom part 13. When the advance movement into the bottom part 13 has been completed, the free end 6 knocks against the appendage 17 and thrusts it outwardly into the bottom part 13 against the return force exerted by the spring 22.

Thus, the arm 16 is pivoted about the axis $X_{16}$ and the appendage 16 is consequently disengaged from the cup-shaped body 22. The spring 15, no longer retained in a compressed position, extends suddenly to make the bolt 14 penetrate the hole 21 of the draw-bar 1.

Upon the attainment of this condition, in which the draw-bar 1 is firmly held within the coupling unit 10, the coupling of the carriages $C_1$ and $C_2$ has been achieved completely automatically.

In order to separate the two carriages again, the actuator 19 is activated so as to return the bolt 14 to the reset position of Figure 2.

Under these conditions, the draw-bar 1 is no longer held within the coupling unit 10 whereby the tractor carriage $C_2$ is free to move away from the trailer carriage $C_1$, disengaging from the draw-bar 1 the free end 6 of which drops again to re-establish the conditions of locking of the traversing movement of the draw-bar 1 itself.

## CLAIMS

1. Device for enabling the coupling together of two carriages ($C_1$, $C_2$), one ($C_1$) of which has a draw-bar (1) with a free end (6) which, during the coupling operation, effects a relative approach movement towards a predetermined region of the other carriage ($C_2$), characterised in that it comprises:

- a guide body (11) having a generally flared configuration with a wider mouth part (12) and a narrower bottom part (13), intended for mounting on the other carriage ($C_2$) with the mouth part (12) located in the said predetermined region and facing outwardly of the said other carriage ($C_2$), so that the free end (6) of the draw-bar (1) can be guided towards the bottom part (13) of the guide body (11) as a result of the relative approach movement,

- coupling means (14) movable between a rest position (Figure 2) and an active position (Figure 3) in which the coupling means (14) themselves can retain the free end (6) of the draw-bar (1) in the bottom part (13) of the guide body (11) in order to effect the coupling together of the two carriages ($C_1$, $C_2$),

- at least one sensor element (17) which can detect the arrival of the free end (6) of the draw-bar (1) in the bottom part (13) of the guide body (11) as a result of the relative approach movement, in order to command the movement of the coupling means (14) to the active position, and

- disengagement means (19, 20) which can be activated selectively to return the coupling means (14) to the rest position.

2. Device according to Claim 1, characterised in that the coupling means are constituted essentially by a bolt (14) which slides along a predetermined axis $(X_{14})$ between a longitudinal rest position (Figure 2) and a longitudinal active position (Figure 3) in which the bolt (14) extends into the bottom part (13) of the guide body (11), the bolt (14) carrying associated resilient means (15) for biasing it into the longitudinal active position and a stop member (18) which is controlled by the at least one sensor element (17) and can retain the bolt (14) in the longitudinal rest position against the action of the resilient biasing means (15).

3. Device according to Claim 2, characterised in that the at least one sensor element has an associated arm (16) which can pivot from a first (Figure 2) to a second (Figure 3) position upon the arrival of the free end (6) of the draw-bar (1) in the bottom part (13) of the guide member (11), and in that the stop member is constituted essentially by an appendage (18) of the arm which, in the first position of the arm (16), retains the bolt (14) in the longitudinal rest position and, in the second position of the arm (16), releases the bolt (14) itself, allowing it to slide to the longitudinal active position.

4. Device according to Claim 3, characterised in that it includes further resilient means (22) for biasing the arm (16) towards the first position.

5. Device according to any one of Claims 1 to 4, characterised in that the disengagement means comprise a linear actuator (19) movable between a respective rest position and a respective active position.

6. Device according to Claim 2 and Claim 5, characterised in that the actuator (19) and the bolt (14) are coupled in a configuration such that, with the actuator (19) in the respective rest position, the bolt (14) can move between the longitudinal rest position (Figure 2) and the longitudinal active position (Figure 3), while the movement of the actuator (19) towards the respective active position causes the movement of the bolt (14) towards the longitudinal rest position.

7.  Device according to Claim 6, characterised in that the bolt (14) has a longitudinal recess (25) with two ends (25a, 25b) separated by a distance substantially equal to the distance travelled by the bolt (14) in its movement between the longitudinal rest position and the longitudinal active position, and in that the actuator (19) carries associated engagement members (20, 24) which act on the bolt (14) in correspondence with the recess (25) and can exert a longitudinal tractive force on one end (25b) of the longitudinal recess (25) in the bolt (14).

8.  Device according to Claim 7, characterised in that the engagement members (20, 24) have a generally rocker-arm configuration.

9.  Device according to any one of Claims 2 to 9, characterised in that the free end (6) of the draw-bar has an aperture (21) through which the bolt (14) can pass in the longitudinal active position.

10.  Device according to any one of the preceding claims, characterised in that one ($C_1$) of the carriages has a locking unit (2 - 8) for retaining the draw-bar (1) in a selectively predetermined fixed position.

11. Device according to Claim 10, characterised in that the draw-bar can effect an angular traversing movement in a predetermined plane relative to the structure of one $(C_1)$ of the carriages, in that the draw-bar (1) is mounted in a generally rocker-arm configuration (2) so as to be pivotable in planes perpendicular to the predetermined plane, and in that complementary coupling parts (7, 8) are interposed between the structure of the said one $(C_1)$ of the carriages and the draw-bar and can be brought into engagement by a pivoting of the draw-bar (1) in at least one of the perpendicular planes in order to stop the angular traversing movement of the draw-bar (1), the complementary coupling parts (7, 8) being shaped so that, when the free end (6) of the draw-bar (1) is retained in the bottom part (13) of the guide body (11), the complementary coupling parts (7, 8) are disengaged from each other and allow the angular traversing movement of the draw-bar (1).

12. Device according to Claim 11, characterised in that a plate (5) is mounted on one $(C_1)$ of the carriages and is provided with apertures (8) extending in a plane parallel to the predetermined plane, and in that the draw-bar (1) has appendages (7) which can engage the apertures (8) to lock the traversing movement of the draw-bar (1) in at least one predetermined angular position.

13. Device according to Claim 12, characterised in that the plate (5) is selectively orientable in a predetermined plane whereby the at least one predetermined angular position is selectively variable.

FIG. 1

FIG 2

FIG. 3

0235094

2/2

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | US-A-3 912 302 (E. PATTERSON) <br> * Whole document * | 1-6 | B 60 D 1/10 <br> B 60 B 33/02 |
| X | US-A-2 844 390 (L. SMITH) <br> * Column 1, line 69 - column 3, line 7; figures 1-4 * | 1-6 | |
| X | US-A-3 889 979 (G. SCHMIESING) <br> * Whole document * | 1,5 | |
| A | | 2,3 | |
| X | GB-A- 338 460 (A. ADE) <br> * Whole document * | 1-3 | |
| A | N.P. CHIRONIS: "Mechanisms, linkages and mechanical controls", 1965, pages 80,81, McGraw-Hill, New York, US; "10 ways to change straight-line direction" <br> * Page 80, figure 2 * | 7-9 | **TECHNICAL FIELDS SEARCHED (Int Cl 4)** <br><br> B 60 D 1/10 <br> B 60 B 33 <br> B 65 G 35 <br> B 62 B 5 |
| A | US-A-4 391 562 (R. HETZNER) <br> * Figure 1 * | 10,11 | |
| A | US-A-2 494 696 (C. FORBES) <br> * Whole document * | 11,12 | |
| | --- | -/- | |

The present search report has been drawn up for all claims

| Place of search | Date of completion of the search | Examiner |
|---|---|---|
| THE HAGUE | 11-06-1987 | LINTZ C.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

# EUROPEAN SEARCH REPORT

**0235094**
Application number

European Patent
Office

EP 87 83 0028

| | DOCUMENTS CONSIDERED TO BE RELEVANT | | Page 2 |
|---|---|---|---|
| Category | Citation of document with indication, where appropriate, of relevant passages | Relevant to claim | CLASSIFICATION OF THE APPLICATION (Int. Cl 4) |
| A | FR-A-2 292 596 (TENTE-ROLLEN GESELLSCHAFT) <br> * Page 4, lines 19-32; figures 1,4 * | 11-13 | |
| | ----- | | |
| | | | TECHNICAL FIELDS SEARCHED (Int. Cl 4) |

The present search report has been drawn up for all claims

| Place of search | Date of completion of the search | Examiner |
|---|---|---|
| THE HAGUE | 11-06-1987 | LINTZ C.H. |